# FASCICULE DE BREVET EUROPEEN

(11) **EP 3 068 633 B1**
(45) Date de publication et mention de la délivrance du brevet: **28.03.2018**
(21) Numéro de dépôt: 14798749.9
(22) Date de dépôt: 06.11.2014
(51) Int. Cl.: B60C 9/26, B60C 9/20, B29D 30/22, B29D 30/30, B60C 9/28

(54) **ARMATURE DE SOMMET POUR PNEUMATIQUE D'AVION**
FLUGZEUGREIFENLAUFSTREIFEN
AIRCRAFT TIRE TREAD

(30) Priorité: 15.11.2013 FR 1361197
(43) Date de publication de la demande: 21.09.2016
(73) Titulaire: Compagnie Générale des Etablissements Michelin, 63000 Clermont-Ferrand (FR)
(72) Inventeur: ROMERO DE LA OSA, Marc, F-63040 Clermont Ferrand Cedex 9 (FR); DELACROIX, Serge, F-63040 Clermont Ferrand Cedex 9 (FR)
(74) Mandataire: Millanvois, Patrick Jacques Jean
(86) Numéro de dépôt international: PCT/EP2014/073865
(87) Numéro de publication internationale: WO 2015/071152

(56) Documents cités:
- EP-A1- 0 540 303
- EP-A1- 1 449 680
- EP-A2- 2 420 396

## Description

La présente invention concerne un pneumatique pour avion, et, en particulier, l'armature de sommet d'un pneumatique pour avion.

Dans ce qui suit, les directions circonférentielle, axiale et radiale du pneumatique désignent respectivement une direction tangente à la surface de roulement du pneumatique selon le sens de rotation du pneumatique, une direction parallèle à l'axe de rotation du pneumatique et une direction perpendiculaire à l'axe de rotation du pneumatique. Par «radialement intérieur, respectivement radialement extérieur», on entend «plus proche, respectivement plus éloigné de l'axe de rotation du pneumatique». Par «axialement intérieur, respectivement axialement extérieur», on entend «plus proche, respectivement plus éloigné du plan équatorial du pneumatique», le plan équatorial du pneumatique étant le plan passant par le milieu de la surface de roulement du pneumatique et perpendiculaire à l'axe de rotation du pneumatique.

De façon générale, un pneumatique comprend une bande roulement, destinée à venir en contact avec un sol par l'intermédiaire d'une surface de roulement, la bande de roulement étant reliée par deux flancs à deux bourrelets, les deux bourrelets étant destinés à assurer une liaison mécanique du pneumatique avec une jante sur laquelle le pneumatique est monté.

Un pneumatique radial pour avion, comprend plus particulièrement une armature de carcasse radiale et une armature de sommet, telles que décrites, par exemple, dans le document EP 1381525.

L'armature de carcasse radiale est la structure de renforcement du pneumatique reliant les deux bourrelets du pneumatique. L'armature de carcasse radiale d'un pneumatique pour avion comprend généralement au moins une couche de carcasse, chaque couche de carcasse étant constituée de renforts le plus souvent textiles, enrobés dans un matériau polymérique de type élastomère ou mélange élastomérique, parallèles entre eux et formant, avec la direction circonférentielle, un angle compris entre 80° et 100°.

L'armature de sommet est la structure de renforcement du pneumatique radialement intérieure à la bande de roulement et au moins en partie radialement extérieure à l'armature de carcasse radiale. L'armature de sommet d'un pneumatique pour avion comprend généralement au moins une couche de sommet, chaque couche de sommet étant constituée de renforts parallèles entre eux et enrobés dans un matériau polymérique de type élastomère ou mélange élastomérique. Parmi les couches de sommet, on distingue usuellement les couches de travail, composant l'armature de travail et constituées le plus souvent de renforts textiles, et les couches de protection, composant l'armature de protection, constituées de renforts métalliques ou textiles, et disposées radialement à l'extérieur de l'armature de travail. Les couches de travail conditionnent le comportement mécanique de l'armature de sommet. Les couches de protection protègent essentiellement les couches de travail des agressions susceptibles de se propager à travers la bande de roulement radialement vers l'intérieur du pneumatique. Une couche de sommet, et en particulier une couche de travail, est géométriquement caractérisée par sa largeur axiale, c'est-à-dire la distance entre ses extrémités axiales.

Les renforts textiles des couches de carcasse et des couches de sommet sont le plus souvent des câbles constitués de filés de filaments textiles, préférentiellement en polyamide aliphatique ou en polyamide aromatique. Les propriétés mécaniques en extension (module, allongement et force à la rupture) des renforts textiles sont mesurées après un conditionnement préalable. Par "conditionnement préalable", on entend le stockage des renforts textiles pendant au moins 24 heures, avant mesure, dans une atmosphère standard selon la norme européenne DIN EN 20139 (température de 20 ± 2°C ; hygrométrie de 65 ± 2 %). Les mesures sont réalisées de manière connue à l'aide d'une machine de traction ZWICK GmbH & Co (Allemagne) de type 1435 ou de type 1445. Les renforts textiles subissent une traction sur une longueur initiale de 400 mm à une vitesse nominale de 200 mm/min. Tous les résultats sont une moyenne de 10 mesures.

Un matériau élastomérique, tel que celui qui enrobe les renforts des couches de carcasse et des couches de sommet, peut être caractérisé mécaniquement, après cuisson, par des caractéristiques de contrainte-déformation en traction, déterminées par des essais de traction. Ces essais de traction sont effectués, sur une éprouvette, selon une méthode connue de l'homme du métier, par exemple conformément à la norme internationale ISO 37, et dans les conditions normales de température (23 + ou - 2°C) et d'hygrométrie (50 + ou -5% d'humidité relative), définies par la norme internationale ISO 471. On appelle module d'élasticité à 10% d'allongement d'un mélange élastomérique, exprimé en méga pascals (MPa), la contrainte de traction mesurée pour un allongement de 10% de l'éprouvette.

Lors de la fabrication d'un pneumatique pour avion, et plus précisément lors de l'étape de pose de l'armature de travail, une couche de travail est le plus souvent obtenue par un enroulement circonférentiel en spires ou par un enroulement circonférentiel en zigzag d'une bandelette, constituée d'au moins un renfort textile continu enrobé dans un mélange élastomérique, sur la surface latérale d'un cylindre de pose. Qu'elle soit réalisée par un enroulement circonférentiel en spires ou un enroulement circonférentiel en zigzag, la couche de travail est alors constituée par la juxtaposition d'une largeur de bandelette à chaque tour d'enroulement.

Par enroulement circonférentiel en spires, on entend un enroulement selon la direction circonférentielle du pneumatique et selon une hélice de diamètre égal au diamètre du cylindre de pose de la bandelette et d'angle moyen, par rapport à la direction circonférentielle, compris entre 0° et 5°. La couche de travail ainsi obtenue par un enroulement en spires est dite circonférentielle, car l'angle des renforts textiles deux à deux parallèles de la bandelette, formé dans le plan équatorial avec la direction circonférentielle, est compris entre 0° et 5°.

Par enroulement circonférentiel en zigzag, on entend un enroulement selon la direction circonférentielle du pneumatique et selon une courbe périodique, c'est-à-dire formée d'ondulations périodiques, oscillant entre des extrema. Enrouler une bandelette selon une courbe périodique signifie que la ligne moyenne de la bandelette enroulée, définie comme la ligne équidistante des bords de la bandelette, coïncide avec la courbe périodique. L'amplitude crête-crête, entre les extrema de la courbe périodique, définit ainsi la largeur axiale de la couche de travail, c'est-à-dire la distance entre ses extrémités axiales. La période de la courbe périodique est le plus souvent comprise entre 0.5 fois et 3 fois la circonférence du cylindre de pose de la bandelette. La courbe périodique est par ailleurs caractérisée par l'angle qu'elle forme, ou plus précisément l'angle que forme la tangente à la courbe, dans le plan équatorial du pneumatique avec la direction circonférentielle du pneumatique, et par un rayon de courbure, au niveau des extrema de la courbe périodique. Pour un enroulement en zigzag classique, l'angle de la courbe périodique, qui correspond à l'angle formé par les renforts textiles deux à deux parallèles constitutifs de la bandelette, est généralement compris entre 5° et 35° par rapport à la direction circonférentielle. Un enroulement circonférentiel en zigzag implique que les couches de travail sont nécessairement assemblées par paire, une paire de couches de travail constituant un binappe de travail.

Un binappe de travail est constitué par deux couches de travail radialement superposées en zone courante, c'est-à-dire dans la portion axialement intérieure aux deux extrémités axiales du binappe de travail, et par plus de deux couches de travail radialement superposées, au niveau de ses extrémités axiales. On appelle surépaisseur d'extrémité axiale le nombre supplémentaires de couches de travail supplémentaires, selon la direction radiale, au niveau des extrémités axiales, par rapport aux deux couches de travail de la zone courante. Cette surépaisseur d'extrémité axiale est générée par les croisements de bandelette, au niveau des extrema de la courbe périodique. Une armature de travail est ainsi constituée par la superposition radiale de plusieurs binappes de travail. Une telle armature de travail comprenant des couches de travail obtenues par un enroulement circonférentiel en zigzag d'une bandelette a été décrite dans les documents EP 0540303, qui divulgue un pneumatique selon le préambule de la revendication 1, EP 0850787, EP 1163120 et EP 1518666.

Dans le cas d'un enroulement circonférentiel en zigzag, il est connu que les surépaisseurs d'extrémités axiales des binappes de travail, sont sensibles à l'apparition de dommages d'endurance, telles que des fissures pouvant évoluer vers une dégradation significative de l'armature de travail et, par conséquent, à une réduction de la durée de vie du pneumatique. Ces fissures peuvent apparaître au niveau des interfaces internes d'une surépaisseur d'extrémité axiale d'un binappe de travail, ou à l'interface entre les surépaisseurs d'extrémités axiales de deux binappes de travail adjacents.

Le document FR 2910381 décrit un pneumatique pour avion pouvant être utilisé à grande vitesse, sous charge élevée, tout en ayant un poids réduit. Un tel pneumatique comprend une armature de travail comprenant au moins une couche de travail enroulée en spires radialement à l'intérieur et au moins deux couches de travail enroulées en zigzag radialement à l'extérieur, au moins une couche de travail en spirales étant plus large que les couches de travail en zigzag.

Les inventeurs se sont donnés pour objectif d'améliorer l'endurance de l'armature de travail d'un pneumatique pour avion, en désensibilisant aux risques de fissuration les surépaisseurs d'extrémités axiales des couches de travail.

Cet objectif a été atteint, selon l'invention, par un pneumatique pour avion, comprenant :
- une armature de travail radialement intérieure à une bande de roulement et radialement extérieure à une armature de carcasse,
- l'armature de travail comprenant au moins deux binappes de travail, radialement superposés et ayant respectivement une largeur axiale (L₁, L₂) depuis une première extrémité axiale jusqu'à une deuxième extrémité axiale,
- chaque binappe de travail comprenant au moins en partie deux couches de travail, radialement superposées et respectivement constituées par une juxtaposition axiale de portions de bandelette,
- la bandelette, de largeur axiale W, s'étendant circonférentiellement selon une courbe périodique, formant, dans le plan équatorial du pneumatique et avec la direction circonférentielle du pneumatique, un angle A non nul et ayant un rayon de courbure R au niveau de ses extrema,
- la bandelette étant constituée de renforts enrobés dans un mélange élastomérique, la différence DL entre les largeurs axiales respectives (L₁, L₂) des au moins deux binappes de travail radialement superposés est au moins égale à 2*(W+(R-W/2)*(1-cosA)).

Par binappes de travail radialement superposés, on entend deux binappes de travail au moins en partie en contact l'un avec l'autre et non radialement séparés par un autre élément. En d'autres termes, ce sont deux binappes de travail consécutifs selon la direction radiale.

Un binappe de travail, constitutif de l'armature de travail, est, par définition, constitué par la superposition radiale de deux couches de travail. La largeur du binappe de travail est égale à la largeur axiale de la couche de travail la plus large. La largeur axiale d'une couche de travail est mesurée entre les extrémités axiales de la couche de travail, c'est-à-dire entre les points de la couche de travail les plus axialement extérieurs. Les extrémités axiales de la couche de travail sont matérialisées sur le pneumatique par les renforts textiles les plus axialement extérieurs.

La différence DL entre les largeurs axiales respectives (L₁, L₂) des au moins deux binappes de travail, c'est-à-dire de deux binappes de travail consécutifs, correspond à deux fois la distance axiale entre les extrémités axiales respectives des deux binappes de travail.

Une valeur minimale de la différence DL entre les largeurs axiales respectives (L₁, L₂) des au moins deux binappes de travail, égale à 2*(W+(R-W/2)*(1-cosA)), garantit que les surépaisseurs d'extrémités axiales de deux binappes de travail consécutifs sont décalées l'une par rapport à l'autre et ne sont donc plus superposées radialement l'une par rapport à l'autre. La suppression de cette superposition radiale, identifiée comme particulièrement sensible à la fissuration, permet d'améliorer l'endurance de l'armature de travail dans cette zone. De plus, ce décalage permet à la surépaisseur d'extrémité axiale du binappe de travail le plus radialement extérieur d'être en contact avec la portion courante du binappe de travail le plus radialement intérieur, par l'intermédiaire d'une surface plane.

La largeur axiale W de la bandelette est avantageusement au moins égale à 2 mm, de préférence au moins égale à 6 mm. Une bandelette comprend généralement au moins 2 renforts textiles, dont le diamètre est environ égal à 1 mm, d'où une largeur minimale de bandelette égale à 2 mm. Une largeur de bandelette au moins égale à 6 mm permet de réduire le temps de pose pour la réalisation du binappe de travail, et donc d'augmenter la productivité.

La largeur axiale W de la bandelette est également avantageusement au plus égale à 20 mm, de préférence au plus égale à 14 mm. Plus la largeur de bandelette est élevée, plus le nombre d'interfaces entre portions de bandelette est élevé au niveau des surépaisseurs d'extrémités axiales, donc plus le risque de fissuration augmente. Ainsi une largeur de bandelette au plus égale à 20 mm, et de préférence au plus égale à 14 mm, garantit un bon compromis entre l'endurance et la productivité.

Il est encore avantageux que le ratio R/W entre le rayon de courbure R, au niveau des extrema de la courbe de périodique de la bandelette, et la largeur W de la bandelette soit au moins égal à 13. En d'autres termes, le rayon de courbure R doit être suffisamment grand par rapport à la largeur W de bandelette. Cette valeur minimale permet d'éviter le risque de flambage de la bandelette hors de son plan au cours de la pose de la bandelette en fabrication, lors des changements de direction au niveau des extrema de la courbe périodique.

L'angle A, formé par la courbe périodique de la bandelette, dans le plan équatorial et avec la direction circonférentielle, est avantageusement au moins égal à 3°, de préférence au moins égal à 5°. Cette valeur minimale d'angle permet de garantir une rigidité de dérive de l'armature de travail minimale, la rigidité de dérive étant définie comme le couple à appliquer au pneumatique pour obtenir un angle de rotation de 1° autour de la direction radiale du pneumatique.

L'angle A, formé par la courbe périodique de la bandelette, dans le plan équatorial et avec la direction circonférentielle, est également avantageusement au plus égal à 35°, de préférence au plus à 25°. Cette valeur maximale d'angle permet de garantir une rigidité de dérive de l'armature de travail maximale.

Selon un mode de réalisation préféré, les renforts de la bandelette sont constitués d'un matériau textile. Les renforts textiles sont usuellement utilisés pour l'armature de travail d'un pneumatique pour avion, car ils permettent d'atteindre un bon compromis entre les propriétés mécaniques, en termes de rigidité et de résistance, et la masse.

Selon une première variante du mode de réalisation préféré, les renforts de la bandelette sont constitués d'un polyamide aliphatique, qui est un matériau textile. En effet, les renforts en polyamide aliphatique, tel que le nylon, sont couramment utilisés dans le domaine des pneumatiques pour avion, car ils ont une masse relativement faible, ce qui permet un gain significatif sur la masse du pneumatique et donc sur la charge utile de l'avion.

Selon une deuxième variante du mode de réalisation préféré, les renforts de la bandelette sont constitués d'un polyamide aromatique, qui est un matériau textile. Les renforts en polyamide aromatique, tel que l'aramide, permettent en effet d'obtenir un bon compromis entre la résistance mécanique et la masse. Les renforts en polyamide aromatique permettent une réduction de la masse de la couche de travail, par rapport à des renforts en polyamide aliphatique, pour une couche de travail ayant une résistance à rupture donnée.

Selon une troisième variante du mode de réalisation préféré, les renforts de la bandelette sont constitués d'une combinaison d'un polyamide aliphatique et d'un polyamide aromatique, qui sont respectivement deux matériaux textiles. De tels renforts sont usuellement appelés renforts hybrides et présentent les avantages techniques du nylon et de l'aramide : résistance mécanique, déformabilité en traction et masse faible. En particulier, ils ont un comportement dit bi-module, caractérisé par un faible module d'élasticité aux petits allongements et un module plus élevé aux forts allongements. Les renforts hybrides permettent également une réduction de la masse de la couche de travail, par rapport à des renforts en polyamide aliphatique, pour une couche de travail ayant une résistance à rupture donnée.

L'invention concerne également un procédé de fabrication d'un pneumatique pour avion selon l'invention. Ce procédé comprend une étape de fabrication de l'armature de travail, dans laquelle les au moins deux binappes de travail, radialement superposés et ayant respectivement une largeur axiale (L₁, L₂) depuis une première extrémité axiale jusqu'à une deuxième extrémité axiale, sont obtenus par un enroulement circonférentiel en zigzag d'une bandelette, de largeur axiale W, sur la surface d'un cylindre de pose de rayon R_{f} et ayant pour axe l'axe de rotation du pneumatique, selon une courbe périodique, formant, dans le plan équatorial et avec la direction circonférentielle, un angle A non nul et ayant un rayon de courbure R au niveau de ses extrema, de telle sorte que la différence DL entre les largeurs axiales respectives (L₁, L₂) des au moins deux binappes de travail radialement superposés est au moins égale à 2*(W+(R-W/2)*(1-cosA)).

Les caractéristiques et autres avantages de l'invention seront mieux compris à l'aide des figures 1 à 4, non représentées à l'échelle :
- Figure 1 : demi-vue en coupe d'un pneumatique selon l'invention, dans un plan méridien ou radial (YZ) passant par l'axe de rotation (YY') du pneumatique.
- Figure 2 : vue d'ensemble d'une bandelette constitutive d'une couche de travail d'un pneumatique selon l'invention.
- Figure 3A et 3B : vues en coupe, dans un plan méridien (YZ), des zones d'extrémités axiales de deux binappes de travail consécutifs respectivement d'un pneumatique de référence (figure 3A) et d'un pneumatique selon l'invention (figure 3B).
- Figure 4 : vue en perspective d'une bandelette enroulée circonférentiellement en zig-zag, selon une courbe périodique, sur la surface d'un cylindre de pose.

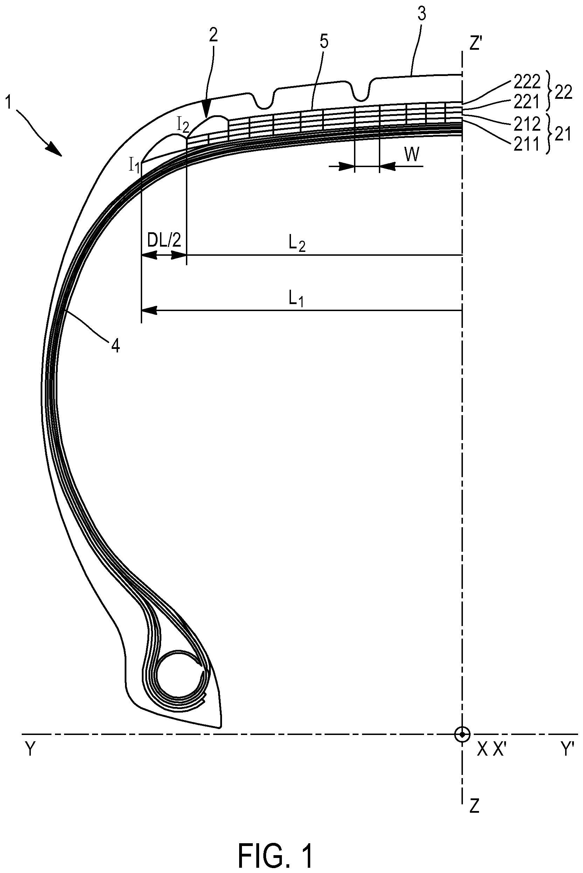

La figure 1 représente une demi-vue en coupe, dans un plan radial ou méridien (YZ) passant par l'axe de rotation (YY') du pneumatique 1, d'un pneumatique 1 pour avion comprenant une armature de travail 2 radialement intérieure à une bande de roulement 3 et radialement extérieure à une armature de carcasse 4. L'armature de travail 2 comprend deux binappes de travail (21, 22), radialement superposés et ayant respectivement une largeur axiale (L₁, L₂) depuis une première extrémité axiale (I₁, I₂) jusqu'à une deuxième extrémité axiale (I'₁, I'₂) (non représentée). Chaque binappe de travail (21, 22) comprend au moins en partie deux couches de travail (211, 212; 221, 222), radialement superposées et respectivement constituées par une juxtaposition axiale de bandelettes 5 de largeur W.

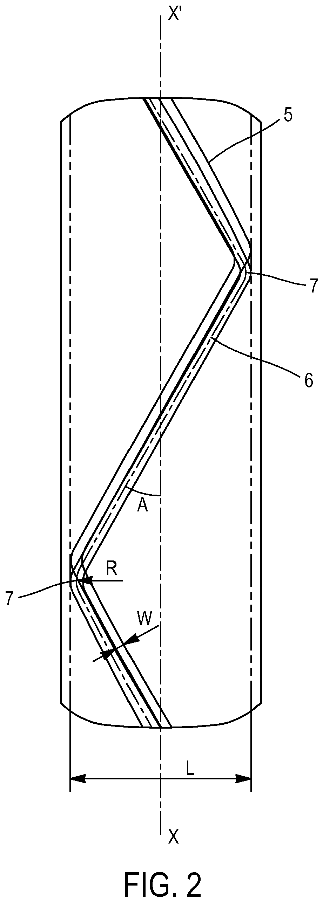

La figure 2 représente une vue d'ensemble d'une bandelette 5 constitutive d'un binappe de travail de largeur axiale L. Sur la figure 2, un enroulement en zigzag sur deux tours est représenté. La bandelette 5 de largeur W a une ligne moyenne, s'étendant circonférentiellement, c'est-à-dire selon la direction (XX') selon une courbe périodique 6 comprenant des extrema 7. En d'autres termes, la courbe périodique 6 est la courbe support de la ligne moyenne de la bandelette 5. La courbe périodique 6 forme, dans le plan équatorial (XZ) et avec la direction circonférentielle (XX'), un angle A non nul. La courbe périodique 6 a un rayon de courbure moyen R au niveau de ses extrema 7. A chaque tour d'enroulement en zigzag, la bandelette 5 est décalée axialement de manière à obtenir une juxtaposition axiale de portions de bandelette de largeur W.

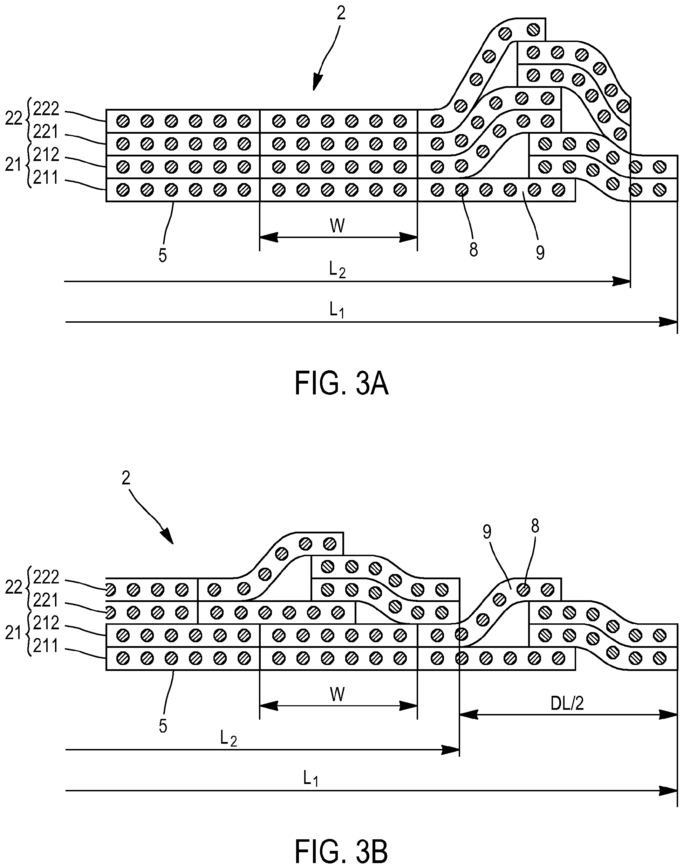

La figure 3A est une vue en coupe, dans un plan radial (YZ), d'une zone d'extrémité axiale de deux binappes de travail (21, 22) d'une armature de travail 2 d'un pneumatique de référence. Chaque binappe de travail (21, 22), respectivement de largeur axiale L₁ et L₂, est constitué de 2 couches de travail (211, 212 ; 221, 222) radialement superposées en zone courante et de 4 couches de travail en partie superposées au niveau de la surépaisseur d'extrémité axiale. Chaque couche de travail (211, 212; 221, 222) est constituée d'une juxtaposition axiale de portions de bandelette 5 de largeur W. Chaque portion de bandelette 5 comprend des renforts textiles 8 enrobés dans un mélange élastomérique 9. Dans le cas du pneumatique de référence, les surépaisseurs d'extrémités axiales respectives des deux binappes de travail (21, 22) sont au moins en partie radialement superposées.

La figure 3B est une vue en coupe, dans un plan radial (YZ), d'une zone d'extrémité axiale de deux binappes de travail (21, 22) d'une armature de travail 2 d'un pneumatique selon l'invention. Dans ce cas, les surépaisseurs d'extrémités axiales respectives des deux binappes de travail (21, 22) sont axialement décalées d'une distance axiale DL/2 à chacune des deux zones d'extrémités axiales.

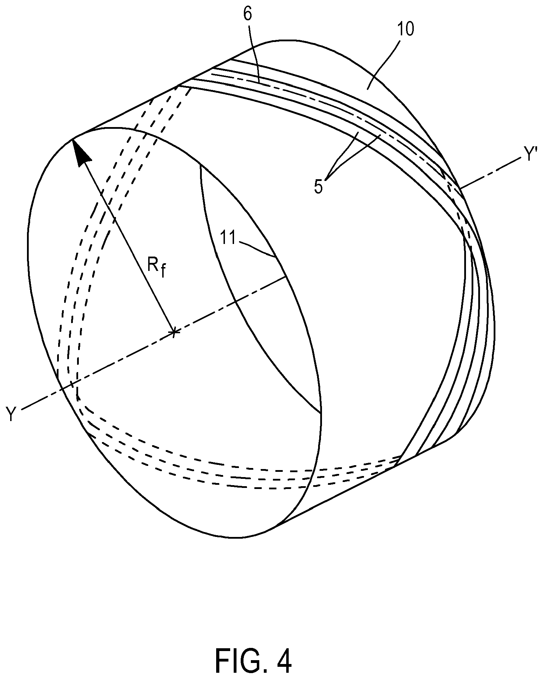

La figure 4 est une vue en perspective d'une bandelette 5 enroulée circonférentiellement en zig-zag, selon une courbe périodique 7, sur la surface latérale 10 d'un cylindre de pose 11 de rayon R_{f} et ayant pour axe l'axe de rotation (YY') du pneumatique.

Les inventeurs ont réalisé l'invention pour un pneumatique pour avion de dimension 1400X530 R 23.

Dans le pneumatique étudié, l'armature de travail comprend deux binappes de travail radialement superposés, le binappe de travail le plus radialement intérieur ayant une largeur axiale L₁ égale à 379 mm et le binappe de travail le plus radialement extérieur ayant une largeur axiale L₂ égale à 349 mm. La différence DL entre les largeurs axiales respectives (L₁, L₂) des deux binappes de travail radialement superposés est, dans ce cas, égale à 30 mm. La bandelette constitutive d'un binappe de travail ayant une largeur W égale à 11 mm et étant enroulée en zigzag selon une courbe périodique, formant, dans le plan équatorial du pneumatique et avec la direction circonférentielle du pneumatique, un angle A de l'ordre de 10° et ayant un rayon de courbure R de l'ordre de 200 mm au niveau de ses extrema, la différence DL, égale à 30 mm, est donc supérieure à 2*(W+(R-W/2)*(1-cosA) égale à 28 mm. En outre le ratio R/W est égal à 18, donc supérieur à 13. En outre, les renforts textiles de la bandelette sont des renforts hybrides, constitués d'une combinaison d'un polyamide aliphatique et d'un polyamide aromatique. Le gain en endurance d'un pneumatique comprenant deux binappes de travail selon l'invention, par rapport au pneumatique de référence, est estimé égal à au moins 10%. Cette endurance est mesurée par le nombre de dommages constatés sur un pneumatique ayant été soumis à un test reglémentaire TSO, tel que défini par la European Aviation European Safety Agency (EASA).

## Revendications

1. Pneumatique (1) pour avion comprenant:
- une armature de travail (2) radialement intérieure à une bande de roulement (3) et radialement extérieure à une armature de carcasse (4),
- l'armature de travail (2) comprenant au moins deux binappes de travail (21, 22), radialement superposés et ayant respectivement une largeur axiale (L₁, L₂) depuis une première extrémité axiale (I₁, I₂) jusqu'à une deuxième extrémité axiale (I'₁, I'₂),
- chaque binappe de travail (21, 22) comprenant au moins en partie deux couches de travail (211, 212; 221, 222), radialement superposées et respectivement constituées par une juxtaposition axiale de portions de bandelette (5),
- la bandelette (5), de largeur axiale W, s'étendant circonférentiellement selon une courbe périodique (6), formant, dans le plan équatorial (XZ) du pneumatique et avec la direction circonférentielle (XX') du pneumatique, un angle A non nul et ayant un rayon de courbure R au niveau de ses extrema (7),
- la bandelette (5) étant constituée de renforts (8) enrobés dans un mélange élastomérique (9),
**caractérisé en ce que** la différence DL entre les largeurs axiales respectives (L₁, L₂) des au moins deux binappes de travail (21, 22) radialement superposés est au moins égale à 2*(W+(R- W/2)*(1-cosA)).

2. Pneumatique (1) pour avion selon la revendication 1, **dans lequel** la largeur axiale W de la bandelette (5) est au moins égale à 2 mm, de préférence au moins égale à 6 mm.

3. Pneumatique (1) pour avion selon l'une quelconque des revendications 1 ou 2, **dans lequel** la largeur axiale W de la bandelette (5) est au plus égale à 20 mm, de préférence au plus égale à 14 mm.

4. Pneumatique (1) pour avion selon l'une quelconque des revendications 1 à 3, **dans lequel** le ratio R/W entre le rayon de courbure R, au niveau des extrema (7) de la courbe de périodique (6) de la bandelette (5), et la largeur W de la bandelette (5) est au moins égal à 13.

5. Pneumatique (1) pour avion selon l'une quelconque des revendications 1 à 4, **dans lequel** l'angle A, formé par la courbe périodique (6) de la bandelette (5), dans le plan équatorial (XZ) et avec la direction circonférentielle (XX'), est au moins égal à 3°, de préférence au moins égal à 5°.

6. Pneumatique (1) pour avion selon l'une quelconque des revendications 1 à 5, **dans lequel** l'angle A, formé par la courbe périodique (6) de la bandelette (5), dans le plan équatorial (XZ) et avec la direction circonférentielle (XX'), est au plus égal à 35°, de préférence au plus à 25°.

7. Pneumatique (1) pour avion selon l'une quelconque des revendications 1 à 6, **dans lequel** les renforts (8) de la bandelette (5) sont constitués d'un matériau textile.

8. Pneumatique (1) pour avion selon l'une quelconque des revendications 1 à 7, **dans lequel** les renforts (8) de la bandelette (5) sont constitués d'un polyamide aliphatique.

9. Pneumatique (1) pour avion selon l'une quelconque des revendications 1 à 7, **dans lequel** les renforts (8) de la bandelette (5) sont constitués d'un polyamide aromatique.

10. Pneumatique (1) pour avion selon l'une quelconque des revendications 1 à 7, **dans lequel** les renforts (8) de la bandelette (5) sont constitués d'une combinaison d'un polyamide aliphatique et d'un polyamide aromatique.

11. Procédé de fabrication d'un pneumatique (1) pour avion selon l'une quelconque des revendications 1 à 10, comprenant une étape de fabrication de l'armature de travail (2), **dans laquelle** les au moins deux binappes de travail (21, 22), radialement superposés et ayant respectivement une largeur axiale (L₁, L₂) depuis une première extrémité axiale (I₁, I₂) jusqu'à une deuxième extrémité axiale (I'₁, I'₂), sont obtenus par un enroulement circonférentiel en zigzag d'une bandelette (5), de largeur axiale W, sur la surface latérale (10) d'un cylindre de pose (11) de rayon R_{f} et ayant pour axe l'axe de rotation (YY') du pneumatique, selon une courbe périodique (6), formant, dans le plan équatorial (XZ) et avec la direction circonférentielle (XX'), un angle A non nul et ayant un rayon de courbure R au niveau de ses extrema (7), de telle sorte que la différence DL entre les largeurs axiales respectives (L₁, L₂) des au moins deux binappes de travail (21, 22) radialement superposés est au moins égale, en valeur absolue, à 2*(W+(R-W/2)*(1-cosA)).

## Patentansprüche

1. Reifen (1) für ein Flugzeug, aufweisend:
- eine Arbeitsbewehrung (2), welche sich radial innerhalb von einer Reifenlauffläche (3) und radial außerhalb von einer Karkassenbewehrung (4) befindet,
- wobei die Arbeitsbewehrung (2) mindestens zwei Arbeitsdoppellagen (21, 22) aufweist, welche radial übereinander gelegt sind und jeweils eine axiale Breite (L₁, L₂) von einem ersten axialen Ende (I₁, I₂) bis zu einem zweiten axialen Ende (I'₁, I'₂) aufweisen,
- wobei jede Arbeitsdoppellage (21, 22) wenigstens teilweise zwei Arbeitsschichten (211, 212; 221, 222) aufweist, welche radial übereinander gelegt sind und jeweils von einer axialen Aneinanderreihung von Bandabschnitten (5) gebildet werden,
- wobei sich das Band (5) mit axialer Breite W über den Umfang gemäß einer periodischen Kurve (6) erstreckt, welche in der Äquatorebene (XZ) des Reifens und mit der Umfangsrichtung (XX') des Reifens einen Winkel A ungleich Null einschließt und einen Kurvenradius R im Bereich ihrer Extrema (7) aufweist,
- wobei das Band (5) von in einem elastomeren Gemisch (9) eingebetteten Verstärkungen (8) gebildet ist,
**dadurch gekennzeichnet, dass** die Differenz DL zwischen den jeweiligen axialen Breiten (L₁, L₂) der mindestens zwei radial übereinander gelegten Arbeitsdoppellagen (21, 22) zumindest gleich 2*(W+(R-W/2)*(1-cosA)) ist.

2. Reifen (1) für ein Flugzeug nach dem Anspruch 1, **bei welchem** die axiale Breite W des Bandes (5) mindestens gleich 2 mm, vorzugsweise mindestens gleich 6 mm, ist.

3. Reifen (1) für ein Flugzeug nach einem der Ansprüche 1 oder 2, **bei welchem** die axiale Breite W des Bandes (5) höchstens gleich 20 mm, vorzugsweise höchstens gleich 14 mm, ist.

4. Reifen (1) für ein Flugzeug nach einem der Ansprüche 1 bis 3, **bei welchem** das Verhältnis R/W zwischen dem Krümmungsradius R im Bereich der Extrema (7) der periodischen Kurve (6) des Bandes (5) und der Breite W des Bandes (5) mindestens gleich 13 ist.

5. Reifen (1) für ein Flugzeug nach einem der Ansprüche 1 bis 4, **bei welchem** der Winkel A, welcher von der periodischen Kurve (6) des Bandes (5) in der Äquatorebene (XZ) und mit der Umfangsrichtung (XX') gebildet wird, mindestens gleich 3°, vorzugsweise mindestens gleich 5° ist.

6. Reifen (1) für ein Flugzeug nach einem der Ansprüche 1 bis 5, **bei welchem** der Winkel A, welcher von der periodischen Kurve (6) des Bandes (5) in der Äquatorebene (XZ) und mit der Umfangsrichtung (XX') gebildet wird, höchstens gleich 35°, vorzugsweise mindestens gleich 25° ist.

7. Reifen (1) für ein Flugzeug nach einem der Ansprüche 1 bis 6, **bei welchem** die Verstärkungen (8) des Bandes (5) von einem textilen Material gebildet werden.

8. Reifen (1) für ein Flugzeug nach einem der Ansprüche 1 bis 7, **bei welchem** die Verstärkungen (8) des Bandes (5) von einem aliphatischen Polyamid gebildet werden.

9. Reifen (1) für ein Flugzeug nach einem der Ansprüche 1 bis 7, **bei welchem** die Verstärkungen (8) des Bandes (5) von einem aromatischen Polyamid gebildet werden.

10. Reifen (1) für ein Flugzeug nach einem der Ansprüche 1 bis 7, **bei welchem** die Verstärkungen (8) des Bandes (5) von einer Kombination aus einem aliphatischen Polyamid und einem aromatischen Polyamid gebildet werden.

11. Verfahren zur Herstellung eines Reifens (1) für ein Flugzeug nach einem der Ansprüche 1 bis 10, aufweisend einen Schritt zur Herstellung der Arbeitsbewehrung (2), **bei welchem** die mindestens zwei Arbeitsdoppellagen (21, 22), welche übereinander gelegt sind und jeweils eine axiale Breite (L₁, L₂) von einem ersten axialen Ende (I₁, I₂) bis zu einem zweiten axialen Ende (I'₁, I'₂) aufweisen, durch ein umlaufendes Aufwickeln im Zickzack eines Bandes (5) mit axialer Breite W auf die seitliche Fläche (10) einer Auftragswalze (11) mit Radius R_{f}, und welche als Achse die Drehachse (YY') des Reifens aufweist, gemäß einer periodischen Kurve (6) erzielt werden, welche in der Äquatorebene (XZ) und mit der Umfangsrichtung (XX') einen Winkel A ungleich Null einschließt und einen Kurvenradius R im Bereich ihrer Extrema (7) aufweist, derartig, dass die Differenz DL zwischen den jeweiligen axialen Breiten (L₁, L₂) der mindestens zwei radial übereinander gelegten Arbeitsdoppellagen (21, 22) zumindest gleich in absoluten Werten 2*(W+(R-W/2)*(1-cosA)) ist.

## Claims

1. Aircraft tyre (1) comprising:
- a working reinforcement (2) radially on the inside of a tread (3) and radially on the outside of a carcass reinforcement (4),
- the working reinforcement (2) comprising at least two working bi-plies (21, 22) which are radially superposed and respectively have an axial width (L₁, L₂), from a first axial end (I₁, I₂) to a second axial end (I'₁, I'₂),
- each working bi-ply (21, 22) comprising at least in part two working layers (211, 212; 221, 222) that are radially superposed and respectively made up of an axial juxtaposition of portions of strip (5),
- the strip (5), of axial width W, extending circumferentially in a periodic curve (6) that forms, in the equatorial plane (XZ) of the tyre and with the circumferential direction (XX') of the tyre, a non-zero angle A and has a radius of curvature R at its extrema (7),
- the strip (5) being made up of reinforcers (8) coated in an elastomeric compound (9),
**characterized in that** the difference DL between the respective axial widths (L₁, L₂) of the at least two radially superposed working bi-plies (21, 22) is at least equal to 2 × (W+(R-W/2) × (1-cosA)).

2. Aircraft tyre (1) according to Claim 1, **in which** the axial width W of the strip (5) is at least equal to 2 mm, preferably at least equal to 6 mm.

3. Aircraft tyre (1) according to either one of Claims 1 and 2, **in which** the axial width W of the strip (5) is at most equal to 20 mm, preferably at most equal to 14 mm.

4. Aircraft tyre (1) according to any one of Claims 1 to 3, **in which** the ratio R/W between the radius of curvature R, at the extrema (7) of the periodic curve (6) of the strip (5), and the width W of the strip (5) is at least equal to 13.

5. Aircraft tyre (1) according to any one of Claims 1 to 4, **in which** the angle A formed by the periodic curve (6) of the strip (5) in the equatorial plane (XZ) and with the circumferential direction (XX') is at least equal to 3°, preferably at least equal to 5°.

6. Aircraft tyre (1) according to any one of Claims 1 to 5, **in which** the angle A, formed by the periodic curve (6) of the strip (5) in the equatorial plane (XZ) and with the circumferential direction (XX') is at most equal to 35°, preferably at most to 25°.

7. Aircraft tyre (1) according to any one of Claims 1 to 6, **in which** the reinforcers (8) of the strip (5) are made of a textile material.

8. Aircraft tyre (1) according to any one of Claims 1 to 7, **in which** the reinforcers (8) of the strip (5) are made of an aliphatic polyamide.

9. Aircraft tyre (1) according to any one of Claims 1 to 7, **in which** the reinforcers (8) of the strip (5) are made of an aromatic polyamide.

10. Aircraft tyre (1) according to any one of Claims 1 to 7, **in which** the reinforcers (8) of the strip (5) are made of a combination of an aliphatic polyamide and of an aromatic polyamide.

11. Method of manufacturing an aircraft tyre (1) according to any one of Claims 1 to 10, comprising a step of manufacturing the working reinforcement (2), **in which** step the at least two working bi-plies (21, 22) that are radially superposed and respectively have an axial width (L₁, L₂), from a first axial end (I₁, I₂) to a second axial end (I'₁, I'₂), are obtained by circumferential zigzag winding of a strip (5), of axial width W, on the lateral surface (10) of a tyre building drum (11) of radius R_{f} and having as its axis the axis of rotation (YY') of the tyre, with a periodic curve (6) forming, in the equatorial plane (XZ) and with the circumferential direction (XX'), a non-zero angle A and having a radius of curvature R at its extrema (7) such that the difference DL between the respective axial widths (L₁, L₂) of the at least two radially superposed working bi-plies (21, 22) is at least equal, in terms of absolute value, to 2 × (W+(R-W/2) × (1-cosA)).
